# FASCICULE DE BREVET EUROPEEN

(11) **EP 1 370 895 B1**
(45) Date de publication et mention de la délivrance du brevet: **02.08.2006**
(21) Numéro de dépôt: 02720064.1
(22) Date de dépôt: 13.03.2002
(51) Int. Cl.: G02B 7/182

(54) **DISPOSITIF DE FIXATION ET DE REGLAGE D'UN ORGANE A SUPPORTER**
VORRICHTUNG ZUR HALTERUNG UND JUSTIERUNG EINES BAUTEILS
DEVICE FOR FIXING AND ADJUSTING AN ELEMENT TO BE SUPPORTED

(30) Priorité: 21.03.2001 FR 0103842
(43) Date de publication de la demande: 17.12.2003
(73) Titulaire: Sagem Défense Sécurité, 75015 Paris (FR)
(72) Inventeur: BILLET, Jacques, F-77176 Nandy (FR)
(74) Mandataire: Geismar, Thierry
(86) Numéro de dépôt international: PCT/FR2002/000895
(87) Numéro de publication internationale: WO 2002/075365

(56) Documents cités:
- DE-U- 29 607 680
- FR-A- 2 761 486
- FR-A- 2 773 890
- US-A- 4 988 244
- US-A- 5 726 815

## Description

La présente invention concerne un dispositif de fixation et de réglage d'un organe à supporter, tel qu'un élement d'optique de précision.

On connaît déjà un certain nombre de dispositifs utilisés pour le positionnement et l'orientation dans l'espace d'organes divers par rapport à une base quelconque. On peut citer à titre d'exemples les dispositifs isostatiques de type tri-bipodes ou les plates-formes de Stewart.

Ces dernières sont constituées de six entretoises de longueur réglable reliant l'organe à positionner et à orienter à la base. Ces six longueurs réglables fournissent six degrés de liberté correspondant à trois coordonnées de position et à trois angles d'orientation.

Un tel agencement est connu par le document US-A-5726815 qui décrit un dispositif selon le préambule de la revendication 1.

On connaît également par le document FR-A-2773890 un dispositif dans lequel les entretoises précitées sont assemblées deux par deux pour former des triangles déformables dont la branche opposée à l'organe à positionner a une longueur variable.

Les propriétés essentielles de ces dispositifs sont la précision du réglage susceptible d'être obtenue, l'amplitude du domaine de réglage, ainsi que leur raideur.

La présente invention vise à fournir un dispositif de fixation et de réglage à deux degrés de liberté qui, assemblé par groupe de trois, donne un ensemble de fixation et de réglage à six degrés de liberté du type ci-dessus.

Plus particulièrement, l'invention vise à fournir un tel dispositif donnant une grande précision de réglage.

A cet effet, l'invention a tout d'abord pour objet un dispositif selon la revendication 1.

Ce dispositif fournit donc deux degrés de liberté correspondant chacun aux moyens de réglage d'un des leviers. On verra ci-après qu'il permet une grande démultiplication entre les moyens de réglage et la position des moyens de fixation.

Dans un mode de réalisation particulier, chacun desdits leviers est articulé sur la base autour d'un axe sensiblement perpendiculaire au plan dudit levier.

Plus particulièrement, chacun desdits leviers peut être articulé sur la base par l'intermédiaire d'une lame sensiblement perpendiculaire au plan du levier respectif.

Egalement dans un mode de réalisation particulier, les deux leviers sont sensiblement dans un même plan.

Egalement dans un mode de réalisation particulier, le premier bras de chaque levier est articulé sur le deuxième bras au niveau du sommet respectif du levier.

Egalement dans un mode de réalisation particulier, le premier bras de chaque levier est articulé sur lesdits moyens de fixation.

Les articulations mentionnées ci-dessus peuvent être des articulations du type rotule.

Plus particulièrement, chacune des articulations peut comporter au moins deux lames, dont l'une est sensiblement dans le plan du levier respectif et l'autre est sensiblement perpendiculaire à ce plan.

Encore plus particulièrement, ladite autre lame peut être dans un plan sensiblement parallèle au premier bras du levier respectif.

La lame d'articulation du levier sur la base peut en particulier être dans un plan sensiblement parallèle à celui de ladite autre lame.

On réalise ainsi une double articulation.

D'une manière générale, lesdites lames peuvent être réalisées d'une seule pièce avec le levier respectif.

Les articulations sont donc sans jeu. Par ailleurs, les lames assurent le filtrage opto-mécanique du réglage et des perturbations.

Dans un mode de réalisation particulier; lesdits moyens de réglage sont des moyens de réglage sans jeu.

Plus particulièrement, lesdits moyens de réglage peuvent comprendre un doigt de poussée actionné par un moteur et agissant sur ledit deuxième bras du levier respectif contre l'action de moyens élastiques.

Encore plus particulièrement, ledit moteur peut être un actionneur piézo-électrique.

Ledit moteur peut être amovible.

L'invention a également pour objet un ensemble de fixation et de réglage d'un organe à supporter, tel qu'un élement d'optique de précision, caractérisé par le fait qu'il comprend trois dispositifs tels que décrits ci-dessus, dont les moyens de fixation respectifs sont agencés pour être fixé audit organe en trois points distincts.

Plus particulièrement, les trois dispositifs peuvent être disposés autour d'un axe central en symétrie de rotation de sensiblement 120°.

On décrira maintenant, à titre d'exemple non limitatif, un mode de réalisation particulier de l'invention, en référence aux dessins schématiques annexés dans lesquels :
- la figure 1 est une vue en élévation d'un dispositif de fixation et de réglage selon l'invention ;

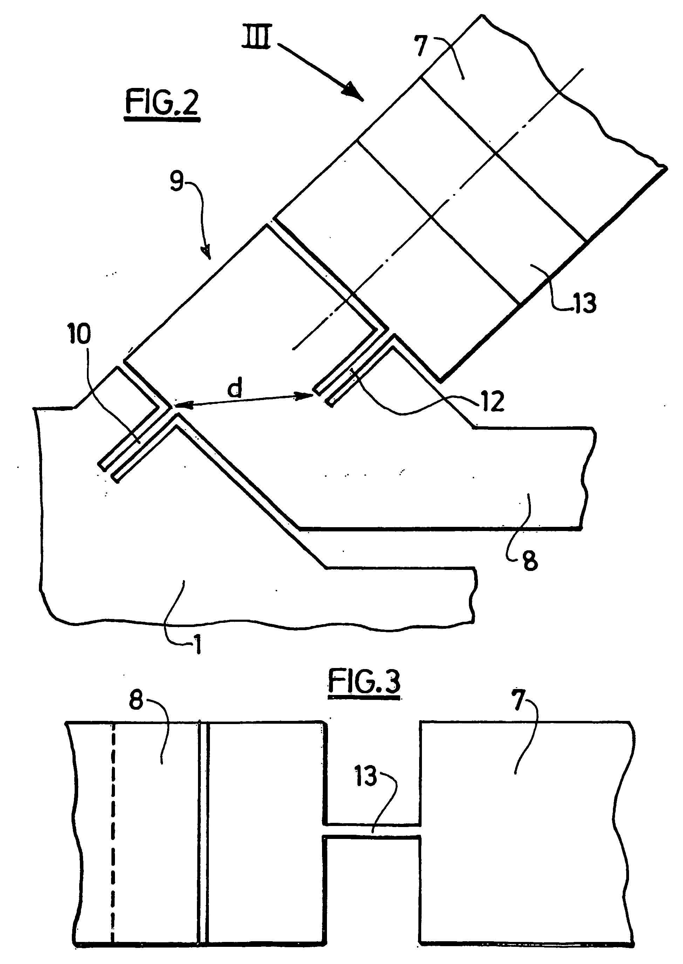

- la figure 2 est une vue à plus grande échelle du détail II de la figure 1 ;
- la figure 3 est une vue selon la flèche III de la figure 2 ;
- la figure 4 est une vue similaire à la figure 2 illustrant le fonctionnement du dispositif ; et
- la figure 5 est un schéma d'un ensemble de fixation et de réglage selon l'invention.

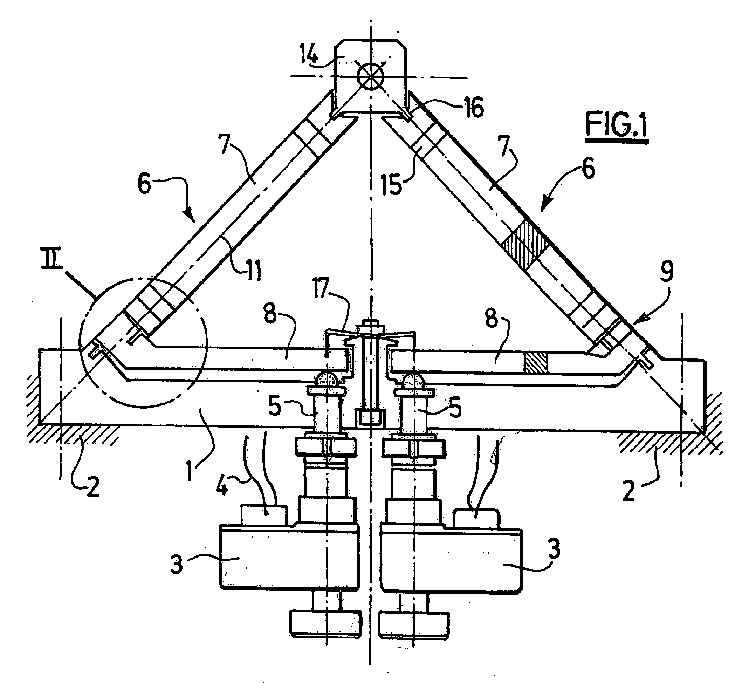

Le dispositif de la figure 1 comprend en premier lieu une base de support 1 fixée rigidement par tout moyen convenable à une plate-forme de montage 2. La base 1 supporte deux actionneurs piézo-électriques 3 alimentés par des conducteurs électriques 4 et agencés chacun pour déplacer un doigt de poussée 5. Après réglage, les doigts 5 peuvent être bloqués par des moyens non représentés et les actionneurs peuvent éventuellement être retirés. On observera que ce blocage ne dérègle pas le dispositif.

Deux leviers triangulaires 6 sensiblement symétriques sont montés chacun à une des extrémités de la base 1, sensiblement dans le même plan. Chaque levier 6 est formé de deux bras 7 et 8 à section généralement carrée reliés entre eux à un des sommets 9 du triangle qu'ils délimitent.

L'extrémité de chaque bras 8 adjacente au bras 7 est articulée sur la base 1 autour d'un axe sensiblement perpendiculaire au plan des leviers 6. A cet effet, cette extrémité du bras 8 est reliée à la base 1 par une lame 10 sensiblement perpendiculaire au plan des leviers 6 et sensiblement parallèle à l'axe 11 du bras 7. La courbure de cette lame assure le degré de liberté de rotation du bras 8 dans le plan du levier 6.

Un agencement analogue relie le bras 7 au bras 8. Une lame 12 est disposée entre ces deux bras dans un plan parallèle au plan de la lame 10 et situé à une certaine distance de ce dernier plan.

Un autre agencement analogue est formé à l'extrémité du bras 7 adjacente au bras 8, mais avec une lame 13 située dans le plan des leviers 6. La lame 13 donne donc au bras 7 un degré de liberté de rotation dans un plan perpendiculaire au plan des leviers 6.

L'extrémité de chaque bras 7 opposée au bras 8 est relié à une pièce de fixation 14 par un agencement similaire à deux lames perpendiculaires. Une première lame 15 est intercalée sur l'extrémité du bras 7 dans le plan des leviers 6 et une deuxième lame 16 relie cette extrémité à la pièce 14. La lame 16 est perpendiculaire au plan des leviers 6 et passe par l'axe 11.

L'extrémité de chaque bras 8 opposée au sommet 9 du levier 6 respectif est sollicitée par un des doigts 5 contre l'action d'un ressort 17. Le doigt 5 est agencé pour pousser l'extrémité du bras 8 de manière à l'entraîner en rotation autour de l'articulation constituée par la lame 10.

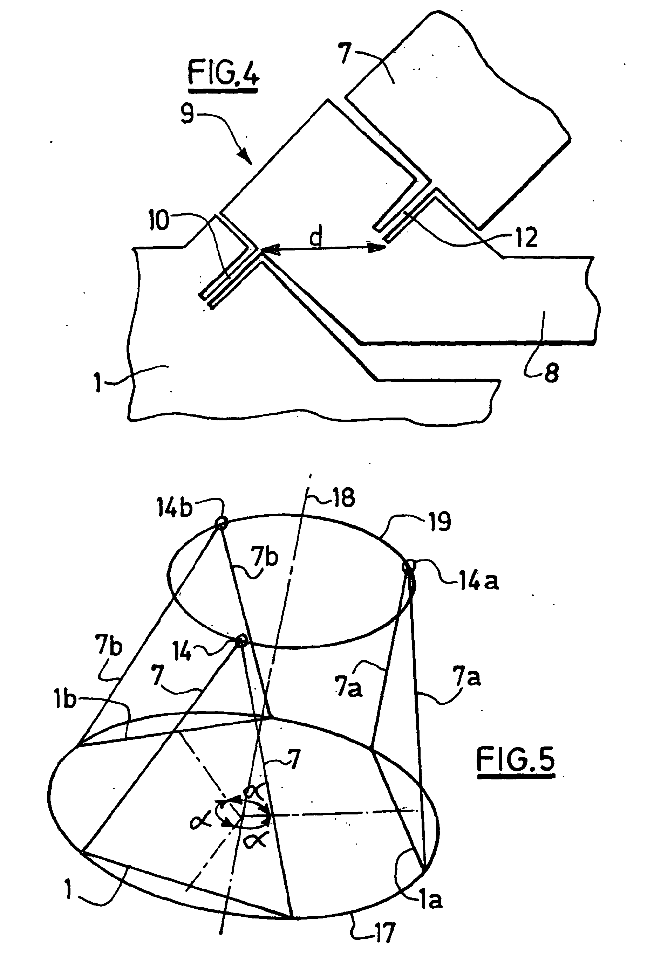

On voit à la figure 4 qu'une telle rotation, permise par les deux lames souples 10 et 12 ainsi que par la lame 16 du levier respectif et par les lames homologues de l'autre levier, provoque un allongement de la distance entre la lame 10 et la pièce 14, correspondant au déplacement du doigt 5 démultiplié dans le rapport de la distance d entre les lames à la longueur du bras 8. Il en résulte un déplacement de la pièce 14 dans le plan des leviers 6, l'action combinée de ces leviers fournissant les deux degrés de liberté dans ce plan.

Le réglage est donc démultiplié dans la quantité voulue à la conception. De plus, ce réglage ne dégrade pas l'élément à régler, les lames 10, 12, 13, 15 et 16 assurant à la fois la cinématique du dispositif et le filtrage mécanique des forces et mouvements appliqués au niveau de la pièce de fixation 14.

On voit à la figure 5 trois dispositifs tels que celui qui vient d'être décrit.

Les trois bases 1, 1a et 1b sont montées dans un même plan sur une plate-forme 17, à 120° les unes des autres autour d'un axe 18. Un objet 19 à fixer et dont la position et l'orientation par rapport à la plate-forme doivent être réglées, par exemple un miroir de télescope, est monté sur les pièces de fixation 14, 14a et 14b. Chaque couple de bras 7, 7a et 7b procure deux degrés de liberté, de sorte que le montage est à six degrés de liberté.

La position et l'orientation de l'objet 19 sont réglées à l'aide des six actionneurs 3. Bien entendu, les six réglages ne sont pas indépendants, chaque réglage d'un bras 7 conduisant généralement à une modification de la longueur et/ou de l'orientation des autres bras. L'homme de métier saura adopter l'algorithme de réglage global le plus approprié.

Le dispositif assure donc les fonctions de tenue isostatique, classique (en configuration hexapode) et de réglage.

La base 1, les leviers 6 et la pièce de fixation 16 sont ici réalisés d'une seule pièce.

## Revendications

1. Dispositif de fixation et de réglage d'un organe à supporter, tel qu'un élement d'optique de précision, ledit dispositif comprenant :
- une base de support (1);
- deux premiers bras (7) extensibles ayant chacun une de ses extrémités reliée à des moyens de fixation (14) audit organe et son autre extrémité reliée à ladite base ;
- des moyens d'ajustement de la longueur de chacun desdits premiers bras ;
**caractérisé par le fait qu**'il comprend :
- deux autres bras (8) articulés par une de leurs extrémités à une extrémité d'un desdits premiers bras de manière à former avec lesdits premiers bras deux leviers triangulaires (6) généralement plans, chacun desdits leviers triangulaires étant articulé sur ladite base au niveau de son sommet respectif en un point (10) distinct du point d'articulation (12) du premier bras sur le deuxième bras ; et
- lesdits moyens d'ajustement comprenant des moyens de réglage (5) montés sur ladite base et agencés pour faire pivoter le deuxième bras (8) de chaque levier dans le plan dudit levier.

2. Dispositif selon la revendication 1, dans lequel chacun desdits leviers est articulé sur la base autour d'un axe sensiblement perpendiculaire au plan dudit levier.

3. Dispositif selon la revendication 2, dans lequel chacun desdits leviers est articulé sur la base par l'intermédiaire d'une lame (10) sensiblement perpendiculaire au plan du levier respectif.

4. Dispositif selon l'une quelconque des revendications 1 à 3, dans lequel les deux leviers sont sensiblement dans un même plan.

5. Dispositif selon l'une quelconque des revendications 1 à 4, dans lequel le premier bras de chaque levier est articulé sur le deuxième bras au niveau du sommet respectif du levier.

6. Dispositif selon l'une quelconque des revendications 1 à 5. dans lequel le premier bras de chaque levier est articulé sur lesdits moyens de fixation.

7. Dispositif selon l'une quelconque des revendications 5 et 6, dans lequel les articulations sont des articulations du type rotule.

8. Dispositif selon la revendication 7, dans lequel chacune des articulations comporte au moins deux lames (12, 13 ; 16, 15), dont l'une (13, 15) est sensiblement dans le plan du levier respectif et l'autre (12, 16) est sensiblement perpendiculaire à ce plan.

9. Dispositif selon la revendication 8, dans lequel ladite autre lame est dans un plan sensiblement parallèle au premier bras du levier respectif.

10. Dispositif selon l'ensemble des revendications 3 et 8, dans lequel la lame d'articulation du levier sur la base est dans un plan sensiblement parallèle à celui de ladite autre lame.

11. Dispositif selon l'une quelconque des revendications 3 et 8, dans lequel lesdites lames sont réalisées d'une seule pièce avec le levier respectif.

12. Dispositif selon l'une quelconque des revendications 1 à 11, dans lequel lesdits moyens de réglage sont des moyens de réglage sans jeu.

13. Dispositif selon la revendication 12, dans lequel lesdits moyens de réglage comprennent un doigt de poussée (5) actionné par un moteur (3) et agissant sur ledit deuxième bras du levier respectif contre l'action de moyens élastiques (17).

14. Dispositif selon la revendication 13, dans lequel ledit moteur est un actionneur piézo-électrique.

15. Dispositif selon l'une quelconque des revendications 13 et 14, dans lequel ledit moteur est amovible.

16. Ensemble de fixation et de réglage d'un organe à supporter (19) tel qu'un élement d'optique de précision, **caractérisé par le fait qu**'il comprend trois dispositifs selon l'une quelconque des revendications 1 à 15, dont les moyens de fixation respectifs sont agencés pour être fixé audit organe en trois points distincts.

17. Ensemble selon la revendication 16, dans lequel les trois dispositifs sont disposés autour d'un axe central (18) en symétrie de rotation de sensiblement 120°.

## Claims

1. Attachment and adjustment device for a body to be supported such as a precision optical element, the said device comprising:
- a support base (1);
- two first extendible arms (7), each with one of its ends connected to means (14) of attachment to the said device and its other end connected to the said base;
- means for adjusting the length of each of the said first arms;
**characterised by** the fact that it comprises:
- two other arms (8) each articulated at one of its ends to one end of one of the said first arms so as to form two generally plane triangular levers (6) with the said first arms, each of the said triangular levers being articulated on the said base at its vertex at a point (10) distinct from the articulation point (12) of the first arm on the second arm; and
- the said adjustment means including setting means (5) fitted on the said base and arranged to make the second arm (8) of each lever pivot on the plane of the said lever.

2. Device according to claim 1, in which each of the said levers is articulated onto the base about an axis approximately perpendicular to the plane of the said lever.

3. Device according to claim 2, in which each of the said levers is articulated onto the base through a blade (10) approximately perpendicular to the plane of the corresponding lever.

4. Device according to any one of claims 1 to 3, in which the two levers are approximately in the same plane.

5. Device according to any one of claims 1 to 4, in which the first arm of each lever is articulated on the second arm at the vertex of the lever.

6. Device according to any one of claims 1 to 5, in which the first arm of each lever is articulated onto the said attachment means.

7. Device according to either claim 5 or 6, in which the articulations are ball joint type articulations.

8. Device according to claim 7, in which each of the articulations comprises at least two blades (12, 13; 16, 15), one of which (13, 15) is practically in the plane of the corresponding lever and the other (12, 16) is approximately perpendicular to this plane.

9. Device according to claim 8, in which the said other blade is in a plane approximately parallel to the first arm of the corresponding lever.

10. Device according to both of claims 3 and 8, in which the articulation blade of the lever on the base is in a plane approximately parallel to the plane of the said other blade.

11. Device according to either claim 3 or 8, in which the said blades are made in a single part with the corresponding lever.

12. Device according to any one of claims 1 to 11, in which the said adjustment means have zero clearance.

13. Device according to claim 12, in which the said adjustment means comprise a thrust pin (5) activated by a motor (3) and acting on the said second arm of the corresponding lever against the action of elastic means (17).

14. Device according to claim 13, in which the said motor is a piezo-electric actuator.

15. Device according to either claim 13 or 14, in which the said motor is removable.

16. Attachment and adjustment assembly for a device to be supported (19) such as a precision optical element, **characterised by** the fact that it comprises three devices according to any one of claims 1 to 15, in which the corresponding attachment means are arranged to be fixed to the said device at three distinct points.

17. Assembly according to claim 16, in which the three devices are arranged around a central axis (18) with symmetry in rotation at approximately 120°.

## Patentansprüche

1. Vorrichtung zur Befestigung und Einstellung eines Stützorgans, wie zum Beispiel ein Feinoptik-Element, wobei die besagte Vorrichtung Folgendes umfasst:
- eine Trägerbasis (1);
- zwei erste ausziehbare Arme (7), bei denen bei jedem eines seiner Enden mit Befestigungsmitteln (14) mit dem besagten Organ verbunden ist und sein anderes Ende mit der besagten Basis verbunden ist;
- Mittel zur Einstellung der Länge jedes der besagten ersten Arme;
**dadurch gekennzeichnet, dass** sie Folgendes umfasst:
- zwei andere Arme (8), durch eines ihrer Enden mit einem Ende eines der besagten ersten Arme gelenkig verbunden und zwar so, dass sie mit den besagten ersten Armen zwei dreieckige Hebel (6) bilden, die im allgemeinen flach sind, wobei jeder der besagten dreieckigen Hebel auf der besagten Basis in Höhe ihres entsprechenden oberen Teils gelenkig gelagert ist und zwar in einem Punkt (10), der sich von dem Gelenkpunkt (12) des ersten Armes auf dem zweiten Arm unterscheidet; und
- die besagten Einstellungsmittel Regelungsmittel (5) umfassen, die auf der besagten Basis montiert und angeordnet sind, um die Drehung des zweiten Arms (8) jedes Hebels in der Ebene des besagten Hebels zu bewirken.

2. Vorrichtung gemäß Anspruch 1, bei der jeder der besagten Hebel gelenkig auf der Basis, um eine Achse herum gelagert ist, deutlich senkrecht zu der Ebene des besagten Hebels.

3. Vorrichtung gemäß Anspruch 2, bei der jeder der besagten Hebel mit Hilfe eines Blechs (10) gelenkig auf der Basis gelagert ist, deutlich senkrecht zu der Ebene des jeweiligen Hebels.

4. Vorrichtung gemäß einem der Ansprüche 1 bis 3, bei der sich die beiden Hebel deutlich in der gleichen Ebene befinden.

5. Vorrichtung gemäß einem der Ansprüche 1 bis 4, bei der der erste Arm jedes Hebels gelenkig auf dem zweiten Arm gelagert ist, in der Höhe des jeweiligen oberen Teils des Hebels.

6. Vorrichtung gemäß einem der Ansprüche 1 bis 5, bei der der erste Arm jedes Hebels gelenkig auf den besagten Befestigungsmitteln gelagert ist.

7. Vorrichtung gemäß einem der Ansprüche 5 und 6, bei der die Gelenke Kugelgelenke sind.

8. Vorrichtung gemäß Anspruch 7, bei der jedes der Gelenke mindestens zwei Bleche (12, 13; 16, 15) umfasst, von denen eines (13, 15) sich deutlich in der Ebene des jeweiligen Hebels befindet und das andere (12, 16) deutlich senkrecht zu dieser Ebene liegt.

9. Vorrichtung gemäß Anspruch 8, bei der das besagte andere Blech sich in einer Ebene befindet, die deutlich parallel zu dem ersten Arm des jeweiligen Hebels liegt.

10. Vorrichtung gemäß der Kombination der Ansprüche 3 und 8, bei der das Gelenkblech des Hebels auf der Basis sich in einer Ebene befindet, die deutlich parallel zu der des besagten anderen Blechs liegt.

11. Vorrichtung gemäß einem der Ansprüche 3 und 8, bei der die besagten Bleche aus einem einzigen Stück mit dem jeweiligen Hebel bestehen.

12. Vorrichtung gemäß einem der Ansprüche 1 bis 11, bei der die besagten Regelungsmittel kein Spiel aufweisen.

13. Vorrichtung gemäß Anspruch 12, bei der die besagten Regelungsmittel einen Druckfinger (5) umfassen, der von einem Motor (3) angetrieben wird und auf den besagten zweiten Finger des jeweiligen Hebels wirkt, gegen die Einwirkung von elastischen Mitteln (17).

14. Vorrichtung gemäß Anspruch 13, bei der der besagte Motor ein piezoelektrischer Schalter ist.

15. Vorrichtung gemäß einem der Ansprüche 13 und 14, bei der der besagte Motor beweglich ist.

16. Befestigungs- und Regelungsgruppe eines Stützorgans (19), wie zum Beispiel ein Feinoptik-Element, **dadurch gekennzeichnet**, das sie drei Vorrichtungen gemäß einem der Ansprüche 1 bis 15 umfasst, deren jeweilige Befestigungsmittel angeordnet sind, um mit dem besagten Organ an drei unterschiedlichen Punkten befestigt zu werden.

17. Gruppe gemäß Anspruch 16, bei der die drei Vorrichtungen um eine Mittelachse (18) herum angeordnet sind, in einer Rotationssymmetrie von deutlich 120°.
